# EUROPÄISCHE PATENTSCHRIFT

(11) **EP 2 087 181 B1**
(45) Veröffentlichungstag und Bekanntmachung des Hinweises auf die Patenterteilung: **12.06.2019**
(21) Anmeldenummer: 07846891.5
(22) Anmeldetag: 29.11.2007
(51) Int. Cl.: E03C 1/084, E03C 1/02, G05D 7/01

(54) **SANITÄRES EINBAULEMENT**
SANITARY INSTALLATION ELEMENT
ÉLÉMENT D'INSERTION SANITAIRE

(30) Priorität: 06.12.2006 DE 102006057795; 06.12.2006 DE 202006018577 U; 02.03.2007 DE 202007003264 U; 02.03.2007 DE 102007010618
(43) Veröffentlichungstag der Anmeldung: 12.08.2009
(73) Patentinhaber: Neoperl GmbH, 79379 Müllheim (DE)
(72) Erfinder: ZOLLER, Uwe, 9500 Villach (AT); WEIS, Christoph, 79379 Müllheim (DE); GRETHER, Hermann, 79379 Müllheim (DE)
(74) Vertreter: Kunst, Manuel Nikolaus Johannes
(86) Internationale Anmeldenummer: PCT/EP2007/010366
(87) Internationale Veröffentlichungsnummer: WO 2008/067948

(56) Entgegenhaltungen:
- AT-B- 258 063
- DE-A1- 2 658 742
- US-A- 4 562 960

## Beschreibung

Die Erfindung betrifft ein sanitäres Einbauelement, das als ein im Wasserauflauf einer sanitären Auslaufarmatur anordenbarer Strahlregler ausgebildet ist, gemäss Anspruch 1.

Sanitäre Einbauelemente, die in einer Wasserleitung angeordnet sind, sind bereits in den verschiedensten Ausführungen bekannt. So hat man bereits Strahlregler geschaffen, die in den Wasserauslauf einer sanitären Auslaufarmatur einsetzbar sind. Die vorbekannten Strahlregler, die entweder unmittelbar im Wasserauslauf einer sanitären Auslaufarmatur befestigt oder in ein am Wasserauslauf montierbares Auslaufmundstück eingesetzt werden können, weisen regelmäßig einen Strahlzerleger auf, welcher den durch die Rohrleitung und den Armaturenkörper zufließenden Wasserstrom in eine Vielzahl von Einzelstrahlen unterteilt. Diese Einzelstrahlen können je nach Strahlregler-Ausführung bei Bedarf belüftet werden, bevor in einer dem Strahlzerleger nachfolgenden Homogenisiereinrichtung und/oder einem abströmseitigen Strömungsgleichrichter, die eine netz-, gitter-, sieb- oder wabenartige Struktur haben, ein homogener, weicher und nicht-spritzender Wasserstrahl am Wasserauslauf geformt wird.

Damit der Strahlregler seine Funktion optimal erfüllen und den aus dem Wasserauslauf austretenden Wasserstrahl formen kann, ist eine gewisse, durch den Strahlregler durchströmende Wassermenge erforderlich. Da der Strahlzerleger und gegebenenfalls auch die nachfolgenden Funktionseinheiten des Strahlreglers ein Strömungshindernis bilden, besteht bei niedrigen Drücken die Gefahr, dass durch den Strahlregler keine ausreichende Wassermenge durchfließen und der Strahlregler seine Funktion nicht erfüllen kann, und dass der aus dem Strahlregler austretende Wasserstrahl als unkomfortabel empfunden wird.

Aus der AT 258 063 B ist bereits ein als Durchflussmengenregler ausgebildetes sanitäres Einbauelement bekannt, das in einer Wasserleitung angeordnet ist. Da in hohen Gebäuden die statischen Drücke und die an einer Zapfstelle verfügbaren Fließdrücke sehr unterschiedlich sind, liegt dem vorbekannten Durchflussmengenregler die Aufgabe zu Grunde, gleichbleibende Betriebsverhältnisse an den Zapfstellen sicherzustellen. Der vorbekannte Durchflussmengenregler weist dazu eine Zumischeinrichtung mit einem Drosselelement auf, das unter dem Druck des zuströmenden Wassers von einer Offenstellung gegen die Rückstellkraft einer Rückstellfeder in eine Drosselstellung bewegbar ist, wobei die Zumischeinrichtung in der Offenstellung des Drosselelementes einen größeren lichten Durchflussquerschnitt und in der Drosselstellung des Drosselelementes einen demgegenüber reduzierten lichten Durchflussquerschnitt bereitstellt. Der Drosselkörper ist stromlinienartig geformt und hülsenförmig ausgebildet. Während der Drosselkörper in der Offenstellung in dem die maximale Durchflussmenge bestimmenden Durchflussquerschnitt des Reglergehäuses berührungsfrei eintaucht, wird der Durchflussquerschnitt des vorbekannten Durchflussmengenreglers in der Drosselstellung allein durch die lichte Auslaufstirnseite des hülsenförmigen Drosselkörpers bestimmt. Durch das unter zunehmendem Druck anströmende Wasser wird der Drosselkörper von seiner Offenstellung allmählich in die Drosselstellung bewegt, so dass sich während dieses Regelvorganges eine konstante Durchflussmenge ergibt.

Aus der DE 26 58 742 A der Anmelderin ist bereits ein sanitäres Einbauelement der eingangs erwähnten Art bekannt, das als ein in den Wasserauslauf einer sanitären Auslaufarmatur einsetzbarer Strahlregler ausgebildet ist. Das aus DE 26 58 742 A der Anmelderin vorbekannte Einbauelement weist einen Strahlzerleger auf, welcher den zufließenden Wasserstrom in eine Vielzahl von Einzelstrahlen unterteilt, die anschließend im Strahlreglergehäuse in einen homogenen, nicht-spritzenden und gegebenenfalls auch perlend-weichen Auslaufstrahl geformt werden können. Da bei derartigen Strahlreglern die im Wasser mitgeführten Schmutzpartikel ungehindert bis zum Strahlzerleger gelangen und dort die die Einzelstrahlen bildenden Durchlässe verstopfen können, liegt dem in DE 26 58 742 A beschriebenen Patentgegenstand die Aufgabe zugrunde, einen Strahlregler zu schaffen, der weitgehend unempfindlich gegen Verstopfungen ist und bei dem die eventuell in das Strahlreglergehäuse eingedrungenen Partikel ohne Demontage ausgespült werden können. Der vorbekannte Strahlregler weist dazu einen im Wesentlichen pilzförmigen und an seinem oberen Ende als eine am Umfang gezahnte Scheibe ausgebildeten Strahlzerleger auf, der durch den Druck des auslaufenden Wassers auf einer oberen Reinigungsstellung in eine untere Funktionsstellung gebracht werden kann, in der sich die Einzelstrahlen am gezahnten Scheibenumfang bilden können. Zu Reinigungszwecken kann der Strahlzerleger durch einen geringen manuellen Druck auf das auslaufseitige Stirnende des am pilzförmigen Strahlzerleger vorstehenden Zapfens nach oben gedrückt und derart angehoben werden, dass sich eventuelle Schmutzpartikel am scheibenförmigen Ende des Strahlzerlegers vorbei in den auslaufseitigen Bereich des Strahlreglergehäuses bewegen und von dort aus dem Gehäuseinneren ausgespült werden können. Um diesen Reinigungsvorgang gegebenenfalls auch automatisch durchführen zu können, ist in Figur 6 der DE 26 58 742 A auch eine Strahlregler-Ausführung dargestellt, bei welcher der Strahlregler von seiner Reinigungsstellung in die Funktionsstellung gegen die Rückstellkraft einer Rückstellfeder bewegbar ist.

Zwar erlaubt der aus DE 26 58 742 A vorbekannte Strahlregler eine gegebenenfalls auch automatische Reinigung des Strahlreglers im Bereich seines Strahlzerlegers. Nachteilig ist jedoch, dass der Strahlregler erst in der Funktionsstellung seines Strahlzerlegers funktionsgerecht arbeiten kann und dass in der Offenstellung des vorbekannten Strahlreglers eher ein unkontrolliert durchwirbelter, inhomogener Auslaufstrahl entsteht.

In der US 4 562 960 A ist ein sanitäres Einbauelement vorbeschrieben, das einen Strahlbelüfter hat, dem ein Durchflussmengenregler in Strömungsrichtung vorgeschaltet ist. Während der Durchflussmengenregler das durchströmende Wasser druckunabhängig auf eine festgelegte maximale Durchflussleistung einzuregeln hat, soll der in Strömungsrichtung nachfolgende Strahlbelüfter einen homogenen, perlend-weichen und nicht-spritzenden Wasserstrahl formen. Der Durchflussmengenregler des aus US 4 562 960 A vorbekannten Einbauelements weist einen ringförmigen Drosselkörper aus elastischem Material auf, der zwischen sich und einem innenliegenden Regelkörper einen Steuerspalt begrenzt, welcher Steuerspalt mit steigendem Druck des durchströmenden Wassers sich zunehmend verengt, derart, dass auch bei ansteigendem Druck des durchströmenden Wassers eine festgelegte maximale Durchflussleistung nicht überschritten wird. Das vom Durchflussmengenregler des vorbekannten Einbauelements kommende Wasser strömt anschließend durch den in Strömungsrichtung nachfolgenden Strahlbelüfter. Dieser Strahlbelüfter weist einen Strahlzerleger auf, der den zufließenden Wasserstrom in eine Vielzahl von Einzelstrahlen aufteilt. Dabei stellt der die vereinzelten Wasserstrahlen erzeugende Strahlzerleger eine Verengung des Durchflussquerschnittes dar, in welcher Querschnittsverengung die erzeugten Einzelstrahlen eine derartige Beschleunigung erfahren, dass auf der Abströmseite des Strahlzerlegers ein Unterdruck entsteht, mit dessen Hilfe Umgebungsluft in das Strahlreglergehäuse eingesaugt wird, die anschließend mit den Einzelstrahlen vermischt wird, bevor die derart belüfteten Einzelstrahlen in einem abströmseitigen Strömungsgleichrichter zu einem homogenen Gesamtstrahl wieder zusammengeführt werden.

Der im vorbekannten Einbauelement vorgesehene Durchflussmengenregler mischt nicht zu einer Grundleistung des Einbauelements bei niedrigen Wasserdrücken noch eine bestimmte zusätzliche Wassermenge hinzu, um diese zusätzliche Wassermenge bei hohen Durchflussleistungen vollständig zu unterbinden, vielmehr regelt der vorbekannte Durchflussmengenregler die Durchflussleistung lediglich auf einen festgelegten Maximalwert ein.

Es besteht daher insbesondere die Aufgabe, ein sanitäres Einbauelement der eingangs erwähnten Art zu schaffen, das sowohl in niedrigen als auch in hohen Druckbereichen stets einen optimalen Durchflussquerschnitt bereitstellt.

Die erfindungsgemäße Lösung dieser Aufgabe besteht bei dem sanitären Einbauelement der eingangs erwähnten Art insbesondere darin, dass das zumindest eine, in Schließstellung verformte Schließelement in dieser Schließstellung einen Teilbereich des Strahlzerlegers verschließend überdeckt.

Das erfindungsgemäße Einbauelement ist als ein im Wasserauslauf einer sanitären Auslaufarmatur anordenbarer Strahlregler ausgebildet. Der erfindungsgemäße Strahlregler weist eine Zumischeinrichtung auf, die zuströmseitig vor dem Strahlzerleger angeordnet ist. Bei einer solchen Ausführungsform kann die bei herkömmlichen Strahlreglern charakteristische Durchflusskurve, welche die Form einer Wurzelfunktion aufweist, wenn man den Durchfluss (Y-Achse) über den Druck (X-Achse) darstellt, deutlich verbessert werden. Durch das als Strahlregler ausgestaltete Einbauelement durchströmt nämlich auch in den niedrigeren Druckbereichen eine ausreichende Wassermenge, damit der Strahlregler seine Funktion optimal erfüllen und einen homogenen, weichen und nicht-spritzenden Wasserstrahl formen kann, der vom Anwender als komfortabel empfunden wird. Somit lässt sich die Durchflusskurve des als Strahlregler ausgebildeten Einbauelementes sowohl bei niedrigerem Druck als auch bei demgegenüber höherem Druck stets in einer Komfortzone halten.

Damit das Schließelement in seiner Schließstellung als Wasserdrossel wirksam werden kann, ist erfindungsgemäß vorgesehen, dass das zumindest eine, in Schließstellung verformte Schließelement in Schließstellung einen Teilbereich des Strahlzerlegers verschließend überdeckt. In dieser Schließstellung wird dem zufließenden Wasser der Zugang zu dem vom Schließelement überdeckten Teilbereich des Strahlzerlegers versperrt.

Damit das erfindungsgemäße Einbauelement nicht durch die im zufließenden Wasserstrom eventuell enthaltenen Schmutzpartikel in seiner Funktion beeinträchtigt werden kann, ist es vorteilhaft, wenn der Strahlregler zuströmseitig ein Vorsatz- oder Filtersieb trägt. Dabei lassen sich die im Wasser eventuell enthaltenen Schmutzpartikel in Strömungsrichtung vor dem Einbauelement sammeln, wenn das Vorsatz- oder Filtersieb trichterförmig ausgestaltet ist.

Um den im erfindungsgemäßen Einbauelement geformten Wasserstrahl auch über einen breiten Druckbereich stets in der Komfortzone zu halten, ist es vorteilhaft, wenn die Zumischeinrichtung zumindest zwei Schließelemente hat, oder wenn das wenigstens eine Schließelement zumindest zwei Schließelement-Teilbereiche aufweist, die vorzugsweise bei verschiedenen und insbesondere abgestuften Wasserdrücken von ihrer Zumisch- oder Offenstellung in die Schließstellung bewegbar sind.

Das Funktionsprinzip des erfindungsgemäßen Einbauelementes kann in Verbindung mit den verschiedensten Strahlzerleger-Ausführungen vorteilhaft eingesetzt werden. So sieht eine Ausführungsform gemäß der Erfindung vor, dass der Strahlzerleger als Diffusor ausgestaltet ist, während eine demgegenüber andere Ausführungsform einen als Lochplatte ausgestalteten Strahlzerleger hat.

Dabei kann eine Ausführungsform der Erfindung beispielsweise darin bestehen, dass das zumindest eine Schließelement schirmartig ausgestaltet ist und in wenigstens einer Schließstellung zumindest mit einem Segment seines Schirmes beziehungsweise Schirmrandbereiches wenigstens einen Teilbereich des Strahlzerlegers oder des Strahlzerleger-Zuflusses oder der Kanalöffnung des By-Pass-Kanals überdeckt.

Um auch ein Einbauelement mit einem schirmartigen Schließelement aus elastischem Material stufenweise über einen breiten Druckbereich betätigen zu können, kann es vorteilhaft sein, wenn der Schirm des schirmartigen Schließelements in Umfangsrichtung in getrennt voneinander verformbare Schirmsegmente unterteilt ist und wenn die Schirmsegmente eines Schließelementes vorzugsweise in verschiedenen und insbesondere in abgestuften Druckbereichen verformbar sind.

Um das Schließelement stets in seiner Funktionsstellung im Bereich des Strahlzerlegers oder der Kanalöffnung des By-Pass-Kanals halten zu können, ist es vorteilhaft, wenn das zumindest eine Schließelement vorzugsweise zuströmseitig am Strahlzerleger gehalten ist.

Eine besonders einfache und kostengünstig herstellbare Ausführungsform gemäß der Erfindung sieht vor, dass das zumindest eine, aus elastischem Material hergestellte Schließelement von einer in Zumisch- oder Offenstellung vorgesehenen Trichterform in eine, in Schließstellung am Strahlzerleger anliegende Schirmform Schließstellung verformbar ist. Dabei wird das zunächst trichterförmige Schließelement bei zunehmendem Wasserdruck in eine Schirmform verformt, die vorzugsweise randseitig am Strahlzerleger oder an dem die Kanalöffnung des By-Pass-Kanals umgrenzenden Randbereich anliegt.

Weiterbildungen gemäß der Erfindung ergeben sich aus den Ansprüchen in Verbindung mit den Zeichnungen. Nachstehend wird die Erfindung anhand vorteilhafter Ausführungsbeispiele noch näher dargestellt.

Es zeigt:
- Fig. 1 und 2: einen Strahlregler mit einer Zumischeinrichtung, die in ihrer hier dargestellten Schließstellung den lichten Durchflussquerschnitt eines im Strahlregler vorgesehenen Strahlzerlegers reduziert, wobei der Strahlregler in Figur 1 in einem perspektivischen Längsschnitt und in Figur 2 in einer teilgeschnittenen Seitenansicht gezeigt ist,
- Fig. 3 und 4: den Strahlregler aus Figur 1 und 2 in der Zumisch- oder Offenstellung der Zumischeinrichtung, in welcher diese den maximalen lichten Durchflussquerschnitt hat,
- Fig. 5: die Durchflusskurve des in den Figuren 1 bis 24 gezeigten Strahlreglers (durchgezogene Linie) im Vergleich zur Durchflusskurve eines herkömmlichen und gemäß dem Stand der Technik ausgestalteten Strahlreglers (strichpunktierte Linie),
- Fig. 6 und 7: einen nur im Bereich seines Strahlzerlegers schematisch dargestellten Strahlregler in der Zumisch- oder Offenposition seines aus elastischem Material hergestellten Schließelements,
- Fig. 8 und 9: den Strahlregler aus Figur 6 und 7 in einer von mehreren Schließstellungen seines Schließelementes, wobei das Schließelement in jeder dieser druckabhängig zuschaltbaren Schließstellungen einen weiteren Teilbereich des lichten Durchflussquerschnitts des Strahlzerlegers verschließt,
- Fig. 10 und 11: einen ebenfalls im Bereich seines Strahlzerlegers schematisch dargestellten Strahlregler, der ein durch radiale Einschnitte in einzelne Schließelement-Segmente unterteiltes Schließelement aus elastischem Material hat,
- Fig. 12 und 13: den Strahlregler aus Figur 10 und 11 in einer der Schließstellungen seines Schließelementes, wobei in Figur 12 und 13 alle Schließelement-Segmente dieses Schließelementes zuströmseitig dicht auf den ihnen zugeordneten Teilbereichen des Strahlreglers aufliegen,
- Fig. 14 bis 19: einen ebenfalls schematisch im Bereich seines Strahlzerlegers dargestellten Strahlregler, der ein ähnlich wie in Figur 10 bis 13 ausgestaltetes Schließelement hat, wobei das Schließelement in Figur 14 in seiner Zumischoder Offenstellung und in den Figuren 15 bis 19 in verschiedenen Schließstellungen dargestellt ist,
- Fig. 20 bis 25: einen Strahlregler im Bereich seines Strahlzerlegers, dessen Zumischeinrichtung ebenfalls stufenweise betätigbar ist, wobei an der Zuströmseite des Strahlzerlegers dazu mehrere ringförmig umlaufende Dichtlippen vorgesehen sind, die in der ihnen zugeordneten und druckabhängig aktivierbaren Schließstellung einen von mehreren koaxial angeordneten Lochkreisen des als Lochplatte ausgestalteten Strahlzerlegers verschließen,
- Fig. 26: die Durchflusskurve des in den Figuren 20 bis 25 dargestellten Strahlreglers,
- Fig. 27 und 28: einen Strahlregler mit einem, in seiner Offenstellung gezeigten Schließelement aus elastischem Material, wobei der Strahlregler in Fig. 27 in einem perspektivischen Längsschnitt und in Fig. 28 in einem seitlichen Teil-Längsschnitt dargestellt ist, und
- Fig. 29 und 30: den Strahlregler aus Fig. 27 und 28 in der Schließstellung seines Schließelementes, wobei der Strahlregler in Fig. 29 in einem perspektivischen Längsschnitt und in Fig. 30 in einem seitlichen Teil-Längsschnitt gezeigt ist.

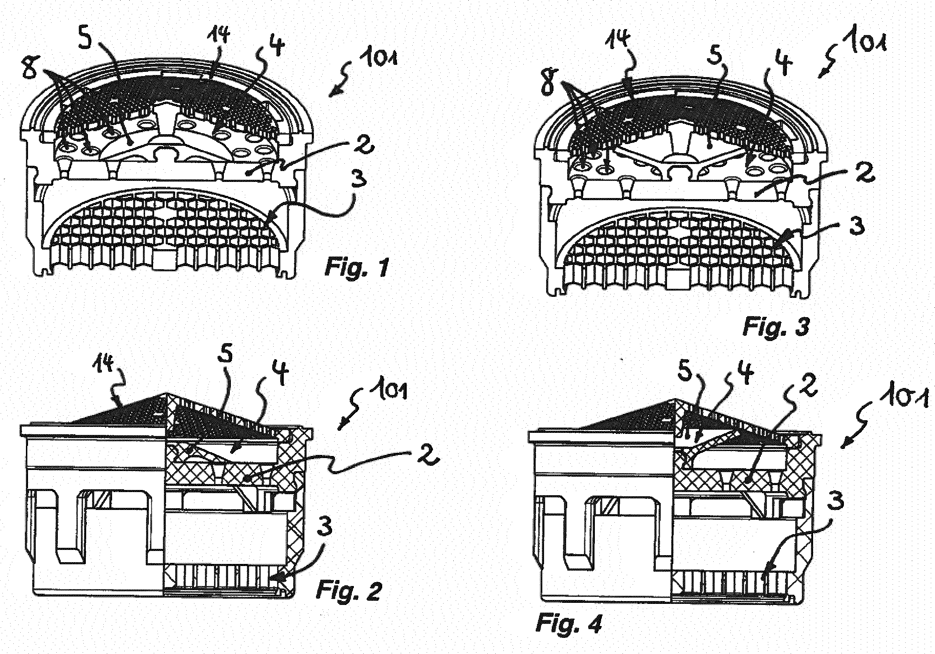

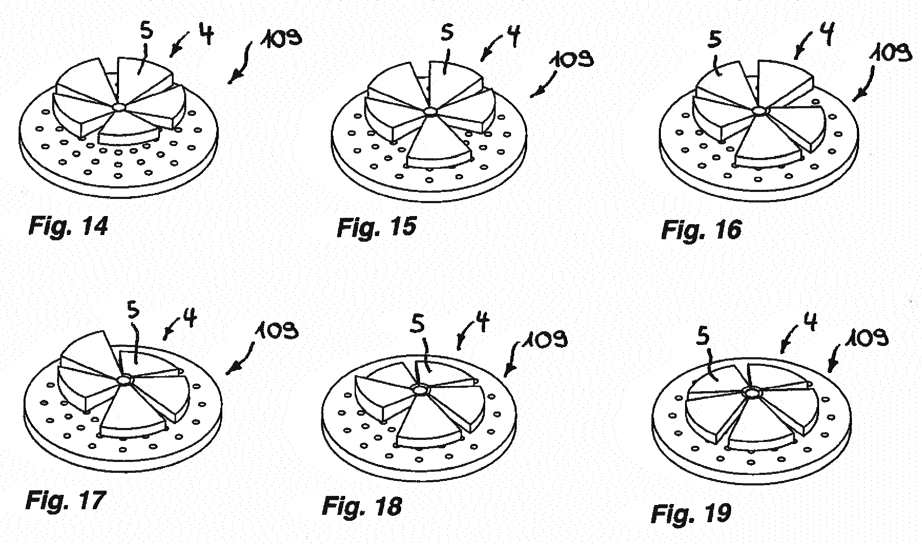

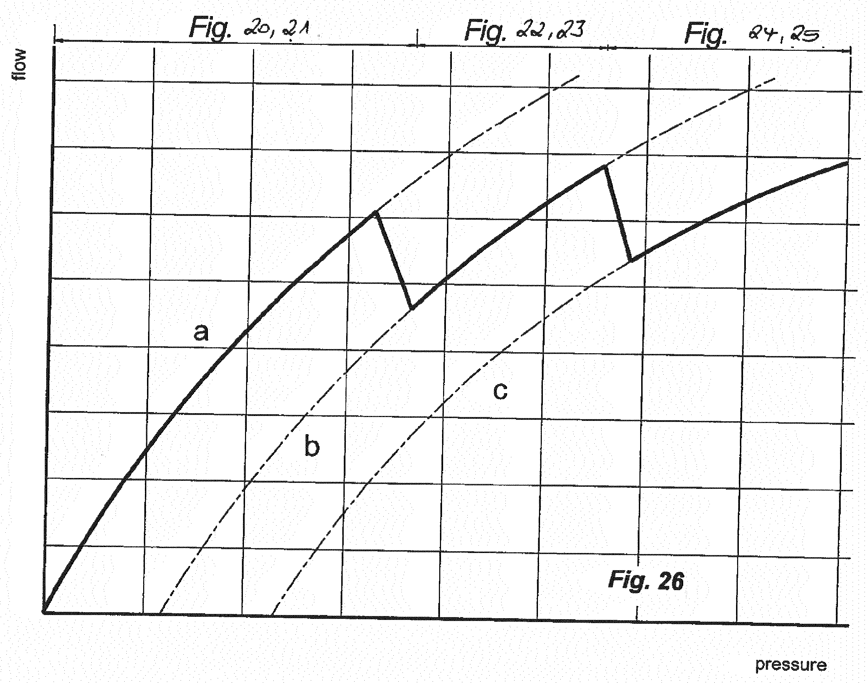

In den Figuren 1 bis 30 sind Ausführungen 101, 107, 108, 109, 111 und 114 eines hier als Strahlregler ausgestalteten sanitären Einbauteiles dargestellt. Diese Strahlregler 101 bis 114, die in einer hier nicht weiter dargestellten sanitären Auslaufarmatur angeordnet sind, weisen einen Strahlzerleger 2 auf, der den zufließenden Wasserstrom in eine Vielzahl von Einzelstrahlen unterteilt, bevor diese Einzelstrahlen mit Luft angereichert und in einem ausströmseitigen Strömungsgleichrichter 3 zu einem homogenen und nicht-spritzenden Gesamtstrahl geformt werden können.

Den Strahlzerlegern 2 der in den Figuren 1 bis 30 gezeigten Strahlreglern 101 bis 114 ist eine Zumischeinrichtung 4 mit zumindest einem Schließelement 5 bzw. 5' in Strömungsrichtung vorgeschaltet. Das zumindest eine Schließelement 5, 5' ist unter dem Druck des zuströmenden Wassers von einer in den Figuren 3, 4; 6, 7; 10, 11; 12; 14; 20, 21; 27, 28 gezeigten Zumisch- oder Offenstellung gegen eine Rückstellkraft in eine in den Figuren 1, 2; 8, 9; 12, 13; 15 bis 19; 22 bis 25; 29, 30 dargestellten Schließstellung bewegbar. Dabei stellt das zumindest eine Schließelement 5, 5' in seiner Zumisch- oder Offenstellung einen größeren lichten Durchflussquerschnitt und in der zumindest einen Schließstellung einen demgegenüber reduzierten lichten Durchflussquerschnitt bereit.

Die hier dargestellten Strahlregler 101 bis 114 zeichnen sich dadurch aus, dass diese Strahlregler 101 bis 114 die bei herkömmlichen Strahlreglern charakteristische Durchflusskurve, welche die Form einer Wurzelfunktion aufweist, wenn man den Durchfluss (Y-Achse) über den Druck (X-Achse) darstellt, deutlich zu verbessern vermögen. Durch die hier dargestellten Strahlregler 101 bis 114 durchströmt nämlich auch in den niedrigen Druckbereichen eine ausreichende Wassermenge, damit diese Strahlregler 101 bis 114 ihre Funktion optimal erfüllen und einen homogenen und nicht-spritzenden Wasserstrahl formen können, der vom Anwender stets als komfortabel empfunden wird. Bei den hier dargestellten Strahlreglern 101 bis 114 ist dazu zuströmseitig vor dem Strahlzerleger 2 die Zumischeinrichtung 4 mit zumindest dem einen Schließelement 5, 5' vorgesehen, welches Schließelement 5, 5' unter dem Druck des zuströmenden Wassers von einer Zumisch- oder Offenstellung gegen eine Rückstellkraft in eine Schließstellung bewegbar ist, wobei die Zumischeinrichtung 4 in der Schließstellung zumindest eines Schließelementes 5, 5' einen größeren lichten Durchflussquerschnitt und in der Schließstellung dieses zumindest einen Schließelementes 5, 5' einen demgegenüber reduzierten lichten Durchflussquerschnitt durch den Strahlregler 101 bis 114 bereitstellt.

Die in den Figuren 1 bis 30 gezeigten Strahlregler 101 bis 114 weisen einen als Lochplatte ausgestalteten Strahlzerleger 2 auf.
In den Figuren 1 bis 4 ist ein Strahlregler 101 mit einem als Lochplatte ausgestalteten Strahlzerleger 2 dargestellt. Dabei ist das zuströmseitig vor dem Strahlzerleger 2 angeordnete und an dem Strahlzerleger 2 mittels einer Rastverbindung gehaltene Schließelement 5 aus elastischem Material hergestellt. Dieses elastische Schließelement 5 ist unter dem Druck des zufließenden Wasserstroms von einer von der Zuströmseite des Strahlzerlegers 2 beabstandeten Zumisch- oder Offenstellung gegen die als Rückstellkraft dienende Eigenelastizität des Drossel- oder Schließelement-Materials in eine Schließstellung verform- bzw. bewegbar, in welcher das Schließelement - wie in den Figuren 3 und 4 gezeigt - einen zentralen Teilbereich des Strahlzerleger-Zuflusses überdeckt und den Zulauf des zufließenden Wasserstromes auf den verbleibenden Teilbereich des Strahlregler-Zuflusses reduziert.

Dabei wird aus einem Vergleich der Figuren 1 und 2 einerseits und der Figur 3 und 4 andererseits deutlich, dass das Schließelement 5 von einer in Zumisch- oder Offenstellung vorgesehenen Trichterform in eine Schirmform in Schließstellung verformbar ist, in welcher das Schließelement 5 zumindest mit seinem Schirmrand zuströmseitig am Strahlzerleger 2 dicht anliegt und wenigstens einen inneren Lochkreis der in konzentrischen Lochkreisen angeordneten Durchflusslöcher 8 des Strahlzerlegers 2 verschließt.

Dem in Figur 1 bis 4 dargestellten Strahlregler 101 ist ein Filter- oder Vorsatzsieb 14 vorgeschaltet, welches die im Wasser enthaltenen Schmutzpartikel ausfiltern soll, die andernfalls den Strahlzerleger 2 verstopfen und die Funktion des Strahlreglers 101 beeinträchtigen könnten.

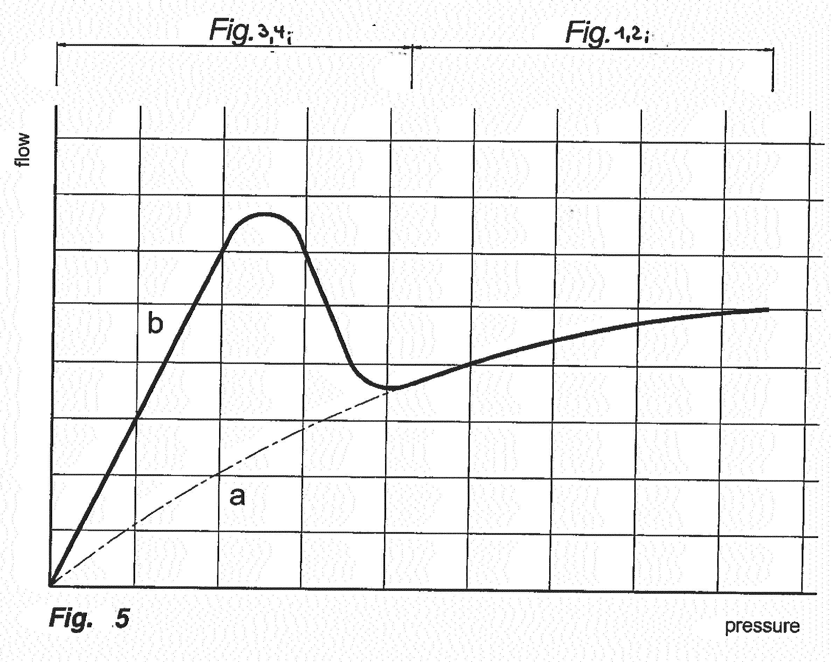

Figur 5 zeigt eine typische Durchflusskurve, die mit der Strahlregler-Ausführung 101 erreichbar ist. Die in einer strichpunktierten Linie dargestellte Kurve a zeigt das Durchflussverhalten eines im Stand der Technik verwendeten Strahlzerlegers, wohingegen die als durchgezogene Linie dargestellte Kurve b im niedrigen Druckbereich aufgrund der By-Pass-Wirkung der noch offenen Schließelemente 5 einen sehr steilen Anstieg des Durchflusses darstellt, der sich dann bei zunehmendem Druck aufgrund des Verschließens der Schließelemente 5 reduziert und bei höherem Druck deckungsgleich mit der Kurve A wird, die das typische Durchflussverhalten eines Strahlzerlegers 2 mit in der Drossel- oder Schließposition befindlichen Schließelementen aufweist.

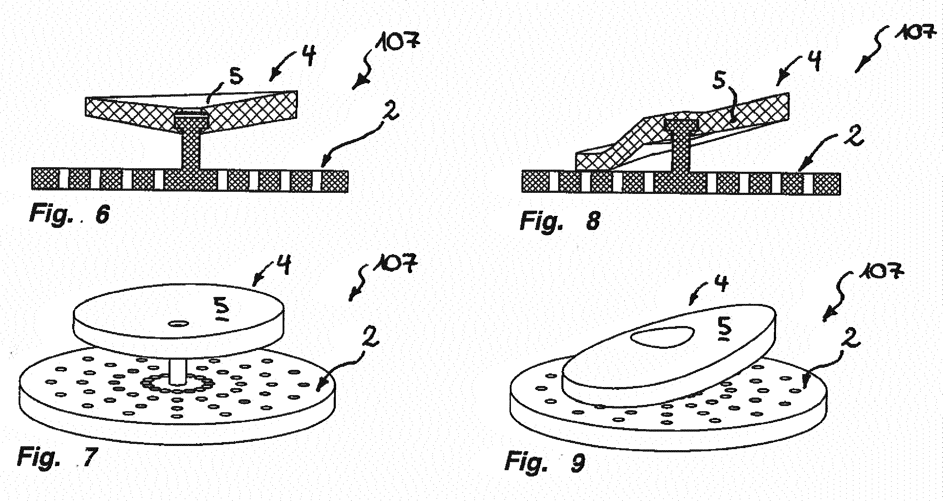

In den Figuren 6 bis 25 sind Strahlregler 107, 108, 109 und 111 mit einer Zumischeinrichtung 4 dargestellt, welche entweder mehrere Schließelemente 5, 5' aufweist oder ein in Teilbereiche oder Segmente segmentiertes Schließelement 5 haben, das in verschiedenen Schließstellungen jeweils einen Teilbereich des Strahlzerleger-Zuflusses überdeckt.

So ist das Schließelement 5 des in den Figuren 6 bis 9 gezeigten Strahlreglers 107 als ein aus elastischem Material hergestellter und unter Druck verformbarer Körper ausgebildet, der stufenweise einzelne Teilbereiche des als Lochplatte ausgestalteten Strahlzerlegers 2 in Abhängigkeit vom Wasserdruck verschließt. Um hier zu einem vielstufigen Verschlussprinzip zu kommen, wie es in den Figuren 6 bis 9 dargestellt ist, ist der Strahlregler 107 so gestaltet, dass sein Schließelement 5 unterschiedliche Steifigkeiten besitzt und sich somit mit steigendem Druck entsprechend der Steifigkeit bzw. Elastizität partiell verformt. Dabei ist das Schließelement 5 als eine tellerförmige elastische Scheibe ausgestaltet, die umlaufend eine unterschiedliche Wandstärke aufweist und somit im Bereich der dünnsten Wandstärke sich bereits bei geringem Druck verformt.

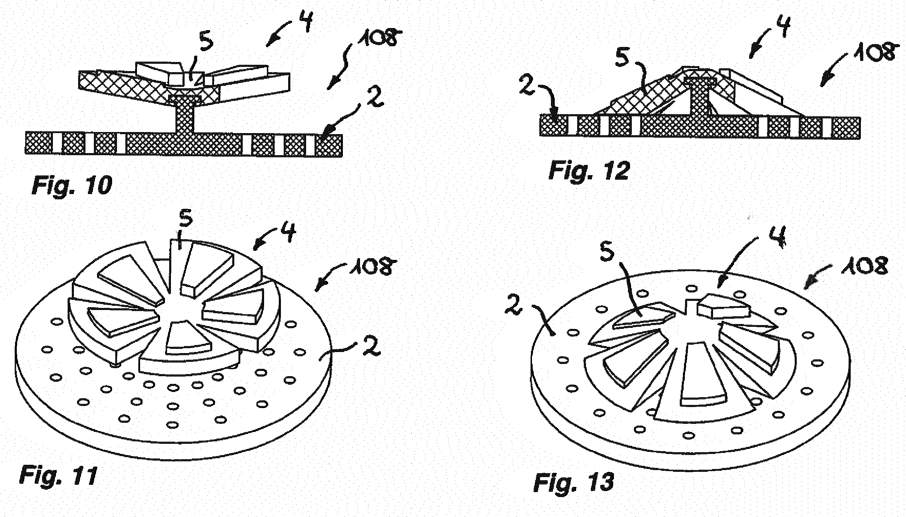

Das schirmförmige Schließelement 5 des in den Figuren 10 bis 13 gezeigten Strahlreglers 108 ist in Umfangsrichtung derart in getrennt voneinander verformbare Schirmsegmente unterteilt, dass dieses Schließelement 5 praktisch eine blütenförmige Scheibe bildet, die aufgrund der radialen Einschnitte aus einzelnen Elementen besteht. Diese einzelnen Segmente oder Scheibenelemente können aufgrund von zusätzlich unterschiedlichen Materialanhäufungen unterschiedliche Steifigkeiten haben. Darüber hinaus, was in diesem Falle nicht dargestellt ist, kann man unterschiedliche Steifigkeiten auch durch unterschiedlich tiefes radiales Einschlitzen, und/oder durch unterschiedliche Breiten der einzelnen blütenblattartigen Segmente oder Scheibenelemente säumen.

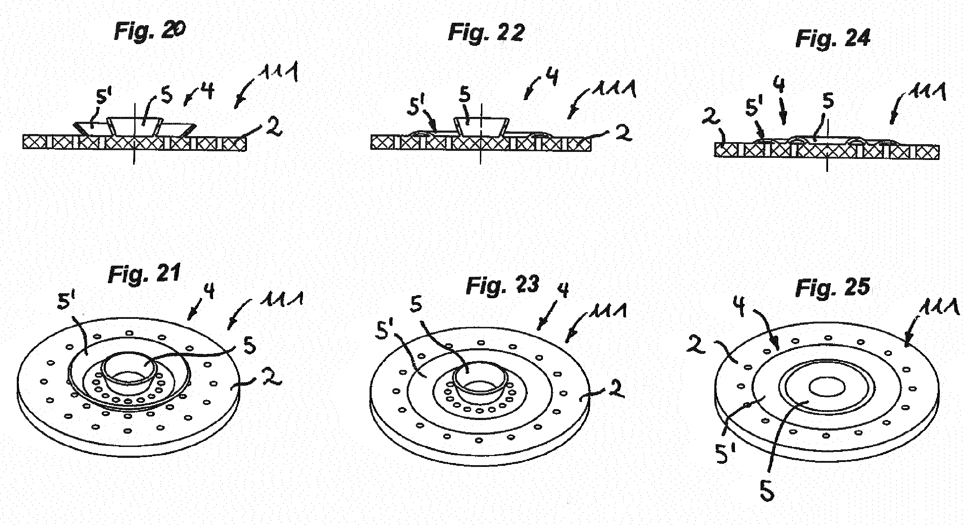

Der in den Figuren 20 bis 25 gezeigte Strahlregler 111 weist ebenfalls einen als Lochplatte ausgestalteten Strahlzerleger 2 mit einer mehrstufigen Zumischeinrichtung 4 auf. An die Zuströmseite des Strahlzerlegers 2 sind dazu Schließelemente 5, 5' angeformt, die jeweils als ringförmige Dichtlippen aus elastischem Material ausgestaltet und zumindest einem benachbarten Lochkreis des Strahlzerlegers 2 zugeordnet sind. Diese als Dichtlippen ausgestalteten Schließelemente 5, 5' sprechen bei unterschiedlichen Wasserdrücken durch Verformung an, wobei die in Ausgangsstellung zum Strahlzerleger 2 geneigten Dichtlippen unter dem Wasserdruck derart gegen den Strahlzerleger 2 gepresst werden, dass der jeweils zugeordnete Lochkreis des Strahlzerlegers 2 dicht verschlossen wird. Bei maximalem Wasserdruck kann das zufließende Wasser - wie in Figur 25 dargestellt - nur noch über den äußeren unverdeckten Lochkreis durch den Strahlzerleger 2 passieren. In Figur 25 ist die Durchflusskurve des Strahlreglers 111 mit ihren mehrstufigen Zumischeinrichtungen 4 dargestellt. Deutlich zu erkennen ist, dass der Durchfluss durch den Strahlregler 111 mittels der sich druckabhängig und stufenweise in ihre Offen- oder Schließstellung bewegenden Offen- oder Schließelemente 5, 5' stets in einer Komfortzone gehalten wird, in welcher der Strahlregler 111 einen homogenen, perlend-weichen Strahl formen kann.

Die in den Fig. 6 bis 25 dargestellten Einbauelemente 107, 108, 109 und 111 können auch als bloße Drossel ausgestaltet sein, die lediglich aus dem Strahlzerleger 2 und der zuströmseitig angeordneten Zumischeinrichtung 4 besteht und an beliebiger Stelle in einer Wasserleitung angeordnet ist.

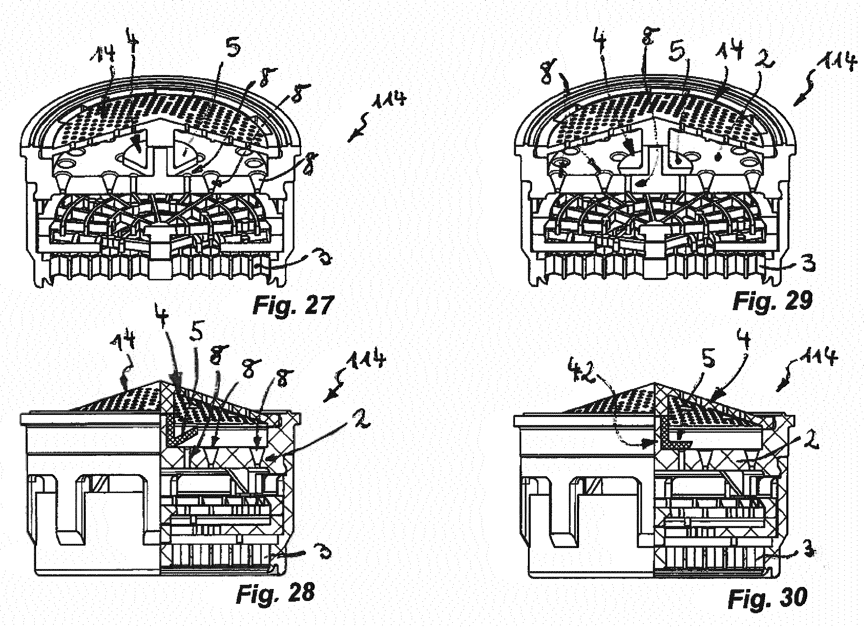

In den Fig. 27 bis 30 ist ein Einbauelement 114 in perspektivischen Längsschnitten (Fig. 27, 29) sowie in teilgeschnittenen Seitenansichten (Fig. 28, 30) gezeigt, das ebenfalls als ein in das Auslaufmundstück einer sanitären Auslaufarmatur einsetzbarer Strahlregler ausgebildet ist. Der als Einbauelement ausgestaltete Strahlregler 114 weist eine Zumischeinrichtung 4 mit zumindest einem Schließelement 5 auf, welches Schließelement 5 unter dem Druck des zuströmenden Wassers von einer in den Fig. 27 und 28 gezeigten Offenstellung gegen eine Rückstellkraft in die in Fig. 29 und 30 dargestellte Schließstellung bewegbar ist. Während die Zumischeinrichtung 4 in der in Fig. 27 und 28 gezeigten Offenstellung seines Schließelementes 5 einen größeren lichten Durchflussquerschnitt freigibt, wird in der in den Fig. 29 und 30 abgebildeten Schließstellung ein demgegenüber reduzierter lichter Durchflussquerschnitt bereitgestellt.

Der Strahlregler 114 gemäß den Fig. 27 bis 30 weist einen Strahlzerleger 2 auf, der hier als Lochplatte ausgebildet ist, die eine Vielzahl, in konzentrischen Ringen angeordnete Durchflusslöcher 8 hat. In dieser Lochplatte 2 wird der zufließende Wasserstrahl in eine Vielzahl von Einzelstrahlen unterteilt. Das aus elastischem Material hergestellte Schließelement 5 ist unter dem Druck des zufließenden Wasserstromes gegen die Eigenelastizität des Drosselelement-Materials derart verformbar, dass das in Schließstellung verformte Schließelement 5 zumindest einen inneren Kreis von Durchflusslöchern 8 überdeckt und den Zulauf des zufließenden Wasserstromes auf wenigstens einen äußeren Kreis von Durchflusslöchern 8 und somit auf den verbleibenden Teilbereich des Strahlzerleger-Zuflusses reduziert.

Das Schließelement 5 ist schirmartig ausgestaltet. Es umgreift einen über die Lochplatte 2 vorstehenden zentralen Befestigungszapfen 42 und ist zwischen der Lochplatte 2 und einem zuströmseitigen Vorsatzsieb 14 eingespannt. Während der äußere Umfangsrandbereich des Schließelementes 5 in Offenstellung eine Trichterform hat, wird dieser äußere Umfangsrandbereich in Schließstellung in eine am Strahlzerleger 2 anliegende Schirmform verformt. Das pilzförmige oder schirmartige und aus elastischem Material hergestellte Schließelement 5 des in den Fig. 27 bis 30 gezeigten Strahlreglers 114 verformt sich somit unter dem Druck des anstehenden Wassers derart, dass ein Teil der in der Lochplatte 2 vorgesehenen Durchflusslöcher 8 verschlossen wird, um bei nachlassendem Wasserdruck aufgrund der Eigenelastizität des elastischen Materials wieder in die Offenstellung zurückzukehren. Die in den Fig. 27 bis 30 dargestellte Ausführungsform ist mit dem Strahlregler vergleichbar, der in den Fig. 1 bis 4 veranschaulicht wurde.

## Patentansprüche

1. Sanitäres Einbauelement, das als ein im Wasserauslauf einer sanitären Auslaufarmatur anordenbarer Strahlregler ausgebildet ist, der einen Strahlzerleger (2) aufweist, welcher (2) den zufließenden Wasserstrom in eine Vielzahl von Einzelstrahlen unterteilt, und der eine Zumischeinrichtung (4) mit zumindest einem aus elastischem Material hergestellten Schließelement (5,5') hat, welches Schließelement (5, 5') unter dem Druck des zuströmenden Wassers von einer Zumisch- oder Offenstellung gegen eine Rückstellkraft in eine Schließstellung bewegbar ist, wobei die Zumischeinrichtung (4) in der Zumisch- oder Offenstellung des zumindest einen Schließelementes (5, 5') einen größeren lichten Durchflussquerschnitt des Strahlzerlegers (2) und in der Schließstellung des zumindest einen Schließelementes (5, 5') einen demgegenüber reduzierten lichten Durchflussquerschnitt des Strahlzerlegers (2) bereitstellt, und wobei die Zumischeinrichtung (4) zuströmseitig vor dem Strahlzerleger (2) vorgesehen ist, **dadurch gekennzeichnet, dass** das zumindest eine in Schliessstellung gegen die Eigenelastizität verformte Schliesselement (5, 5') in dieser Schliessstellung einen Teilbereich des Strahlzerlegers (2)verschliessend überdeckt.

2. Einbauelement nach Anspruch 1, **dadurch gekennzeichnet, dass** das Einbauelement zumindest eine dem Strahlzerleger (2) in Strömungsrichtung nachfolgende Funktionseinheit hat, die zur Strahlaufbereitung dient.

3. Einbauelement nach Anspruch 1 oder 2, **dadurch gekennzeichnet, dass** der Strahlregler zuströmseitig ein Vorsatz- oder Filtersieb (14) trägt.

4. Einbauelement nach Anspruch 3, **dadurch gekennzeichnet, dass** das Vorsatz- oder Filtersieb (14) trichterförmig ausgestaltet ist.

5. Einbauelement nach einem der Ansprüche 1 bis 4, **dadurch gekennzeichnet, dass** die Zumischeinrichtung (4) zumindest zwei Schließelemente (5, 5') hat oder dass das wenigstens eine Schließelement (5) zumindest zwei Schließelement-Teilbereiche aufweist, die vorzugsweise bei verschiedenen und insbesondere abgestuften Wasserdrücken von ihrer Zumisch- oder Offenstellung in die Schließstellung bewegbar sind.

6. Einbauelement nach einem der Ansprüche 1 bis 5, **dadurch gekennzeichnet, dass** der Strahlzerleger (2) als Diffusor ausgestaltet ist.

7. Einbauelement nach einem der Ansprüche 1 bis 5, **dadurch gekennzeichnet, dass** der Strahlzerleger (2) als Lochplatte ausgestaltet ist.

8. Einbauelement nach einem der Ansprüche 5 bis 7, **dadurch gekennzeichnet, dass** zumindest ein Schliesselement (5, 5') schirmartig ausgestaltet ist und in wenigstens einer Schließstellung zumindest mit einem Segment seines Schirmes bzw. Schirmrandbereiches wenigstens einen Teilbereich des Strahlzerlegers oder des Strahlzerleger-Zuflusses überdeckt.

9. Einbauelement nach Anspruch 8, **dadurch gekennzeichnet, dass** der Schirm des schirmartigen Schließelements (5, 5') in Umfangsrichtung in getrennt voneinander verformbare Schirmsegmente unterteilt ist und dass die Schirmsegmente dieses Schließelementes (5, 5') vorzugsweise in verschiedenen und insbesondere abgestuften Druckbereichen verformbar sind.

10. Einbauelement nach einem der Ansprüche 1 bis 9, **dadurch gekennzeichnet, dass** das zumindest eine Schließelement (5, 5') zuströmseitig am Strahlzerleger (2) gehalten ist.

11. Einbauelement nach einem der Ansprüche 1 bis 7, **dadurch gekennzeichnet, dass** das zumindest eine, aus elastischem Material hergestellte Schließelement (5, 5') von einer in Zumisch- oder Offenstellung vorgesehenen Trichterform in eine, in Schließstellung am Strahlzerleger (2) anliegende Schirmform verformbar ist.

## Claims

1. Sanitary installation element which is embodied as a jet regulator that is arrangeable in the water outlet of a sanitary outlet fitting, has a jet splitter (2) which (2) divides the inflowing water flow into a multiplicity of individual jets, and has an admixing device (4) with at least one closing element (5, 5') produced from elastic material, which closing element (5, 5') can move, under the pressure of the inflowing water, from an admixing or open position into a closed position counter to a restoring force, wherein the admixing device (4), in the admixing or open position of the at least one closing element (5, 5'), provides a relatively large clear throughflow cross section of the jet splitter (2), and, in the closed position of the at least one closing element (5, 5'), provides a reduced clear throughflow cross section of the jet splitter (2) in relation thereto, and wherein the admixing device (4) is provided upstream of the jet splitter (2) on the inflow side, **characterized in that** the at least one closing element (5, 5'), which is deformed counter to its intrinsic elasticity in the closed position, covers a subregion of the jet splitter (2) in a closing manner in this closed position.

2. Installation element according to Claim 1, **characterized in that** the installation element has at least one functional unit which follows the jet splitter (2) in the direction of flow and serves for jet preparation.

3. Installation element according to Claim 1 or 2, **characterized in that** the jet regulator carries a dome screen or filter screen (14) on the inflow side.

4. Installation element according to Claim 3, **characterized in that** the dome screen or filter screen (14) is of funnel-shaped design.

5. Installation element according to one of Claims 1 to 4, **characterized in that** the admixing device (4) has at least two closing elements (5, 5'), or **in that** the at least one closing element (5) has at least two closing element subregions which can be moved from their admixing or open position into the closed position preferably at different and in particular stepped water pressures.

6. Installation element according to one of Claims 1 to 5, **characterized in that** the jet splitter (2) is embodied as a diffuser.

7. Installation element according to one of Claims 1 to 5, **characterized in that** the jet splitter (2) is embodied as a perforated plate.

8. Installation element according to one of Claims 5 to 7, **characterized in that** at least one closing element (5, 5') is of shield-like design and, in at least one closed position, covers at least a subregion of the jet splitter or of the jet splitter inlet, at least with a segment of its shield or shield edge region.

9. Installation element according to Claim 8, **characterized in that** the shield of the shield-like closing element (5, 5') is divided in the circumferential direction into shield segments that are deformable separately from one another, and **in that** the shield segments of this closing element (5, 5') are deformable preferably in different and in particular stepped pressure ranges.

10. Installation element according to one of Claims 1 to 9, **characterized in that** the at least one closing element (5, 5') is held on the jet splitter (2) on the inflow side.

11. Installation element according to one of Claims 1 to 7, **characterized in that** the at least one closing element (5, 5'), which is produced from elastic material, can be deformed from a funnel shape, which is provided in the admixing or open position, into a shield shape bearing against the jet splitter (2) in the closed position.

## Revendications

1. Élément d'insertion sanitaire, qui est formé par un régulateur de jet pouvant être disposé dans la sortie d'eau d'une robinetterie sanitaire, qui présente un brise-jet (2), qui (2) divise le courant d'eau entrant en une multiplicité de jets individuels, et qui comporte un dispositif de mélange (4) avec au moins un élément de fermeture (5, 5') fabriqué en matériau élastique, élément de fermeture (5, 5') qui est mobile sous la pression de l'eau entrante d'une position de mélange ou ouverte contre une force de rappel à une position fermée, dans lequel le dispositif de mélange (4) dans la position de mélange ou ouverte dudit au moins un élément de fermeture (5, 5') procure une plus grande section transversale de passage libre du brise-jet (2) et dans la position fermée dudit au moins un élément de fermeture (5, 5') une section transversale de passage libre du brise-jet (2) réduite par rapport à celle-ci, et dans lequel le dispositif de mélange (4) est prévu côté amont avant le brise-jet (2), **caractérisé en ce que** ledit au moins un élément de fermeture (5, 5') déformé dans la position fermée contre son élasticité propre recouvre dans cette position fermée, en la fermant, une région partielle du brise-jet (2).

2. Élément d'insertion selon la revendication 1, **caractérisé en ce que** l'élément d'insertion a au moins une unité fonctionnelle qui suit le brise-jet (2) dans la direction d'écoulement, et qui sert pour la préparation du jet.

3. Élément d'insertion selon une revendication 1 ou 2, **caractérisé en ce que** le régulateur de jet porte du côté amont un tamis d'entrée ou de filtre (14).

4. Élément d'insertion selon la revendication 3, **caractérisé en ce que** le tamis d'entrée ou de filtre (14) est configuré en forme d'entonnoir.

5. Élément d'insertion selon l'une quelconque des revendications 1 à 4, **caractérisé en ce que** le dispositif de mélange (4) comporte au moins deux éléments de fermeture (5, 5') ou **en ce que** ledit au moins un élément de fermeture (5) présente au moins deux régions partielles d'élément de fermeture qui sont mobiles de leur position de mélange ou ouverte à la position fermée de préférence sous des pressions d'eau différentes et en particulier échelonnées.

6. Élément d'insertion selon l'une quelconque des revendications 1 à 5, **caractérisé en ce que** le brise-jet (2) est formé par un diffuseur.

7. Élément d'insertion selon l'une quelconque des revendications 1 à 5, **caractérisé en ce que** le brise-jet (2) est formé par une plaque perforée.

8. Élément d'insertion selon l'une quelconque des revendications 5 à 7, **caractérisé en ce qu'**au moins un élément de fermeture (5, 5') est réalisé en forme de parapluie et recouvre dans au moins une position fermée au moins avec un segment de son parapluie ou de sa région de bord de parapluie au moins une région partielle du brise-jet ou de l'arrivée du brise-jet.

9. Élément d'insertion selon la revendication 8, **caractérisé en ce que** le parapluie de l'élément de fermeture (5, 5') en forme de parapluie est divisé en direction périphérique en segments de parapluie déformables séparément l'un de l'autre et **en ce que** les segments de parapluie de cet élément de fermeture (5, 5') sont déformables de préférence dans des régions de pression différentes et en particulier échelonnées.

10. Élément d'insertion selon l'une quelconque des revendications 1 à 9, **caractérisé en ce que** ledit au moins un élément de fermeture (5, 5') est maintenu côté amont sur le brise-jet (2).

11. Élément d'insertion selon l'une quelconque des revendications 1 à 7, **caractérisé en ce que** ledit au moins un élément de fermeture (5, 5') fabriqué en matériau élastique peut être déformé d'une forme d'entonnoir prévue dans la position de mélange ou ouverte à une forme de parapluie s'appliquant en position fermée sur le brise-jet (2).
